# EUROPEAN PATENT SPECIFICATION

(11) **EP 1 668 350 B1**
(45) Date of publication and mention of the grant of the patent: **13.06.2012**
(21) Application number: 03769493.2
(22) Date of filing: 24.09.2003
(51) Int. Cl.: G01N 27/447

(54) **ELECTROPHORETIC SEPARATION OF AMPHOTERIC MOLECULES**
ELEKTROFORETISCHE TRENNUNG VON AMPHOTERISCHEN MOLEKÜLEN
SEPARATION ELECTROPHORETIQUE DE MOLECULES AMPHOTERES

(43) Date of publication of application: 14.06.2006
(73) Proprietor: Agilent Technologies, Inc., Santa Clara CA 95051 (US)
(72) Inventor: HADBAWNIK,D., Agilent Technologies DeutschlandGmbh, D-76337 Waldbronn (DE)
(74) Representative: Dilg, Haeusler, Schindelmann Patentanwaltsgesellschaft mbH
(86) International application number: PCT/EP2003/050651
(87) International publication number: WO 2005/029060

(56) References cited:
- EP-A- 1 162 454
- WO-A-02/103345
- WO-A-03/008977
- WO-A-03/044485
- DE-A- 10 119 597
- DE-A- 19 930 253
- US-A- 4 181 594
- US-A- 6 156 182

## Description

### BACKGROUND OF THE INVENTION

The present invention relates to electrophoretic separation of amphoteric molecules according to their isoelectric points.

Proteomics studies, which are used to analyze a plurality of proteins present in a cell, require fast and high resolution separation techniques in order to separate and analyze single protein species in a relatively short period of time. A preliminary sequencing of the human genome sequence e.g. revealed that roughly 30 000 to 70 000 open reading frames (ORF) are present in the human genome. Between 100 000 and two million proteins are believed to be expressed in human cells, suggesting that a high rate of messenger RNA splicing and post-translational modifications (PTMs) might be responsible for the plethora of proteins. Post-translational modifications, which can comprise the modification of amino-acids for example proline to hydroxyproline or the linking of carbohydrates to amino-acid side chains, are hard to resolve and analyze.

A state of the art separation technique is the two-dimensional gel electrophoresis. This separation technique involves the separation by isoelectric point in a first dimension by conducting an isoelectric focusing and a separation by size in the second dimension by performing a sodium dodecyl sulphate polyacrylamide gel electrophoresis (SDS-PAGE). This separation technique is able to resolve up to 10 000 components for every gel. One major disadvantage of the two-dimensional gel electrophoresis (2D SDS-PAGE) is its labor-intensive and therefore time-consuming handling. This especially involves the handling of the first-dimension isoelectric focusing gel and the transfer of the pl gradient to the SDS-PAGE gel and subsequent staining and destaining steps. Another disadvantage of the 2D SDS-PAGE is the gel's modest sample capacity preventing the loading of sufficient protein amounts to be able to visualize low abundance proteins or PTMs. Therefore low abundance proteins or PTMs, which are often regulatory proteins, involved in certain diseases, are frequently masked by high abundance proteins in 2D SDS-PAGE.

US 6,156,182 A discloses encapsulated IPG strips. Proteonomic methods for diagnosis and monitoring breast cancer by analyzing protein samples by two-dimensional gel electrophoresis are described in WO 03/044485 A2. WO 02/103345 A1 discloses a gel for electrophoresis, wherein for transferring an IPG gel to a second dimension, the IPG gel is placed on top of the second dimension gel and at least partially solubilised to release macromolecules to the second dimension gel. The teaching of the latter document forms the preamble to claim 9.

### SUMMARY OF THE INVENTION

It is an object of the present invention to provide an improved separation technique. This is solved by the independent claims. Favorable embodiments are subjects of further claims. Thus, preferred embodiments provide a fast separation technique, which can be used for example in proteomic studies, and can also enable to visualize low abundance proteins.

A method for electrophoretic separation of amphoteric molecules according to their isoelectric points comprising the following steps:
A) Carrying out a first separation according to the isoelectric points of the amphoteric molecules in one ore more first strip-like separation media located on a first carrier, wherein the first separation media have a respective first pl range,
B) transferring the amphoteric molecules separated in step A) to a plurality of second strip-like separation media located on a second carrier, wherein the second separation media have a respective second pl range different from the first pl range, the first and second separation media are brought into direct contact, and a voltage is applied to the second separation media in order to transfer the molecules, wherein in step B) the second carrier and the first carrier are positioned relative to each other on top of each other and the first separation media are orientated diagonally or even perpendicular to the second separation media,
C) carrying out a second separation of the molecules(11) in the plurality of second separation media according to isoelectric points, and
D2) isolating the molecules from the second strip-like separation media.

The method provides a fast and easy to handle procedure for separation of a large amount of amphoteric molecules, for example polypeptides or oligopeptides, because many separation media, which are located on the same carrier can easily and quickly be processed at the same time in a single step. This allows a relatively short separation time of less than 24 hours.

In another variant of the method, the amphoteric molecules separated in step A) are isolated from the first strip-like separation media in a step D1).

Due to the plurality of the first and second separation media on first and second carriers, this variant of the method provides the possibility to load high amounts of molecules onto the separation media, therefore enabling the separation and subsequent detection of low-abundance proteins or PTMs of high interest. Due to the two different isoelectric separations in step A) and step C), this method also provides a good high resolution separation of the molecules according to their charges (isoelectric points). The simultaneous processing of a large number of samples furthermore allows a high throughput separation and analysis of the entire complement of proteins expressed in a cell or tissue.

Alternatively, first separation media each having the same pl range may be used and second separation media each having different starting and end points for their pl ranges are used. Due to the fact that the first separation media all have the same pl range and are processed in a single step, it is possible to load aliquots of the same sample on each of the first separation media advantageously in an automated method. The second separation media can then provide a further second separation of the molecules already pre-separated in step A) of the method of the invention.

The first and second separation media may be selected in such a way that the respective pl range of the first separation media is larger than the respective pl range of the second separation media. For example the first separation media can have a maximum pl range from approximately 1 to 12, whereas the second separation media can have a maximum pl range of 1 or even smaller than 1.

This variant provides a two-step isoelectric focusing procedure with a first so-called wide range separation for example over the full pl range of a complement of proteins expressed in a cell or a tissue and a second so-called narrow range separation. During the narrow range separation molecules, which were already pre-separated in the first separation step A) and roughly have the same isoelectric point range (for example isoelectric point range between 3 and 4) are subjected to a narrow range separation in step C), where the proteins are separated according to their isoelectric points with a higher resolution. For example, it is possible to isolate the molecules roughly having the same pl range, for example between 3 and 4 from the first separation media with pl ranges from 3 to 10 and subject these molecules to a second narrow range separation on a second separation medium with a pl range roughly between 3 and 4, therefore allowing a higher resolution of separation in the second separation step C). This two-step isoelectric focusing (IEF) procedure of the invention with the first wide range separation and the second narrow range separation furthermore allows the separation and subsequent identification of proteins with post-translational modifications, which differ in their pl by about 0.1 to 0.05 pl units. Therefore, this allows the identification of even very small functional differences between otherwise similar proteins.

The first strip-like separation media may be arranged roughly parallel to each other on the first carrier and the second strip-like separation media are also arranged roughly parallel to each other on the second carrier.

The roughly parallel orientation of the separation media on their respective carriers allows a highly parallel processing of the separation media in one step because a high amount of these separation media can be easily processed even in a fully automated manner in one step. For example, it is possible to load the molecules to be separated in step A) onto all the first separation media in an automated procedure using robots.

In step B), the first and second separation media are brought into direct contact. This allows an easy direct transfer of the molecules already preselected in step A) from the first to the second separation media. If gel strips are used as first and second separation media this variant of the method of the invention enables an easy "gel to gel loading" of the molecules without any additional transfer steps like extraction of the molecules from the first separation media and subsequent transfer onto the second separation media.

In step B), the second separation media are orientated diagonally to the first separation media, so that every second separation medium is in contact with more than one first separation medium.

This variant of the invention enables a fast and easy transfer of the molecules pre-separated in step A) and located on different first separation media onto one single second separation medium.

In step B) molecules of roughly the same isoelectric point range may be located on different first strip-like separation media are transferred to the same one second strip-like separation medium roughly having the same isoelectric point range as the molecules being transferred.

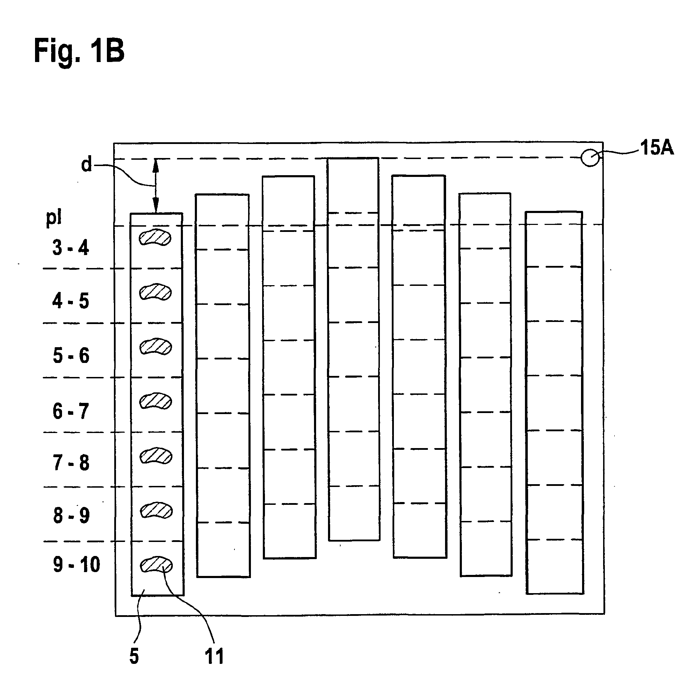

During the first wide range isoelectric focusing separation the molecules are normally pre-separated according to a relatively wide pl range e.g. from 3 to 10, resulting in a large pl gradient from the starting point of the first separation media to their end points. Therefore after the first IEF separation step A) different bands of molecules are present in the first separation media, each band containing different molecules with a relatively brought distribution of isoelectric points, see for example Figure 1b). In this case molecule bands which are for example located in pl areas within pl 3 and 4 might then preferably be transferred to a second separation medium which has a pl gradient from 3 to 4. The second separation media preferably might have the same length as the first separation media, so that the second separation media have a much lower gradient compared to the first separation media, allowing a separation with a higher resolution than in the first step A). After this transfer step B) the molecules with the pl ranges 3 to 4 will then be subjected to a further narrow range separation step C) isolating molecule species with a difference in their pls of roughly 0.1 to 0.05 pl units.

Preferably, gel strips are used as first and second separation media. Gel strips are easy to handle and provide a good focusing ability especially for proteins.

In step B) the first and second separation media are brought into direct contact and then a voltage is applied to the second separation media in order to transfer the molecules according to step B) and carry out the separation according to step C).

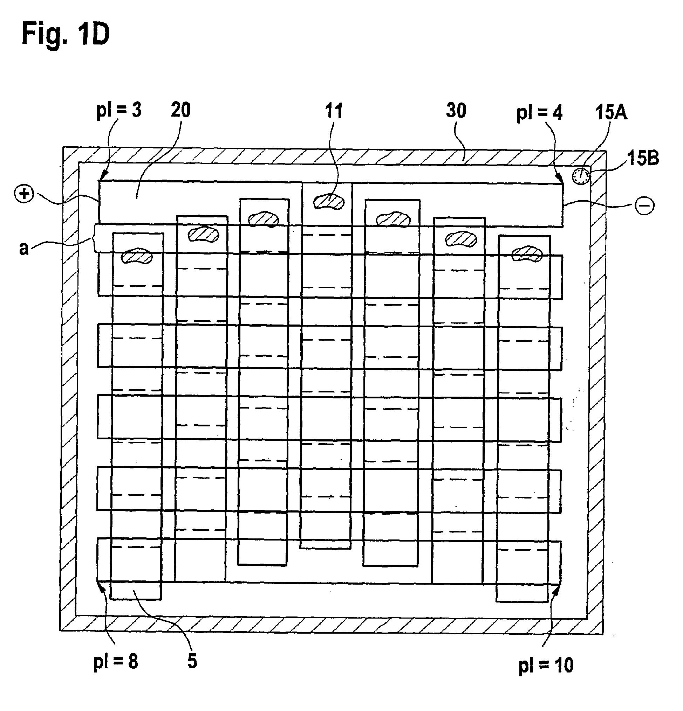

When the first and second separation media are in direct contact and a voltage is applied to the second separation media the molecules, especially in the case of proteins, easily diffuse from the first separation media into the second separation media due to electrokinetic and diffusion effects. This variant is an easy and fast approach because the two steps B) and C) are carried out in one step (see e.g. Figure 1D).

After the second separation of the molecules in step C) or alternatively after the first separation in step A), a grid-like structure is preferably brought into contact with the second separation media in step D2) or step D1), thereby separating the first or second separation media into different compartments. Afterwards at least one solvent can be applied into the different compartments extracting the molecules.

After these steps D1) or D2), the molecules separated by their isoelectric points are in liquid phase and can therefore easily be further processed and analyzed for example by using one-dimensional or multi-dimensional LC chromatography and subsequent analysis using mass-spectroscopy.

It is also possible that prior to application of the at least one solvent, the molecules in the first or second separation media are being fragmented/digested. Fragments of the molecules are normally easier to bring into a liquid phase than the complete molecules. This especially accounts for proteins, which can be digested with proteolytic enzymes like trypsin and can then be easier extracted from, e.g. gel strips as separation media.

It is also possible to carry out a gel electrophoresis after the steps D1) or D2) for further separation of the molecules according to their mass. In this case the two-step isoelectric focusing procedure or alternatively the one-step isoelectric focusing procedure of embodiments of the invention provide a pre-selection for the subsequent gel electrophoresis, which is normally a sodium dodecyl sulphate polyacrylamide gel electrophoresis. Such a variant might provide a high pl resolution separation performance due to the different methods of separation, the isoelectric focusing and the subsequent gel electrophoresis and also might ensure a optimal loading of the narrow range fractions from step C) to the sodium dodecyl sulphate polyacrylamide gel in order to allow the identification of low abundance proteins and PTMs (protein isoforms).

It is also possible to carry out a one-dimensional or multidimensional liquid chromatography (LC) for further separation of the molecules after steps D1) or D2). Multidimensional liquid chromatography normally uses at least two different chromatographic separation techniques, for example ion exchange chromatography, which separates the molecules according to their charges, reversed-phase chromatography, which provides a quasi-molecular size separation in which retention tends to increase with increasing molecular weight, size exclusion chromatography or affinity chromatography like the removal of immunoglobulins using protein A columns. Liquid chromatography has the great advantage that high sample loads can be applied onto the columns therefore allowing the separation and detection of low abundance proteins. Afterwards the molecules separated by the liquid chromatography might be analyzed by mass spectroscopy (MS).

The molecules may be analyzed by a chip array after steps D1) or D2). For example, protein bio-chips can be used, where e.g. antibodies specific for a marker protein are immobilized on the chip. These marker proteins can bind to the antibodies on the chip and can be further analyzed. These variants of the method of the invention enables the detection of e.g. marker proteins for special diseases in cells or tissues of patients by e.g. high throughput analysis.

An apparatus for separation of amphoteric molecules according to their isoelectric points comprises:
- a first carrier with a plurality of first strip-like separation media having a respective first pl range for a first separation step, and
- a second carrier with a plurality of second strip-like separation media having a respective second pl range different from the first pl range for a second separation step.

For transferring the amphoteric molecules separated in the first carrier to the second carrier, the first and second separation media are arranged in direct contact, and a voltage is applied to the second separation media in order to transfer the molecules, and in that the apparatus comprises a positioner adapted for positioning the second carrier and the first carrier relative to each other on top of each other, thereby positioning the strip like first separation media diagonally or even perpendicular to the strip like second separation media.

This apparatus is suited e.g. to carry out a variant of the separation method of the invention. Preferably, first and second separation media comprise gel strips, wherein the gel strips comprise immobilized ampholytes. Immobilized ampholytes can provide a highly stable pl gradient.

The first and second carrier preferably comprise a flat plate or sheet, which can provide a stable area for the first and second separation media. The flat plate can comprise any kind of material suitable for a carrier, for example plastic, polymer, ceramic and glass or any kind of combination thereof.

The first and second carrier advantageously also comprise bar code identifiers for sample tracking. The bar code identifiers ensure an easy identification of first and second carriers and are also suitable for highly automated procedures.

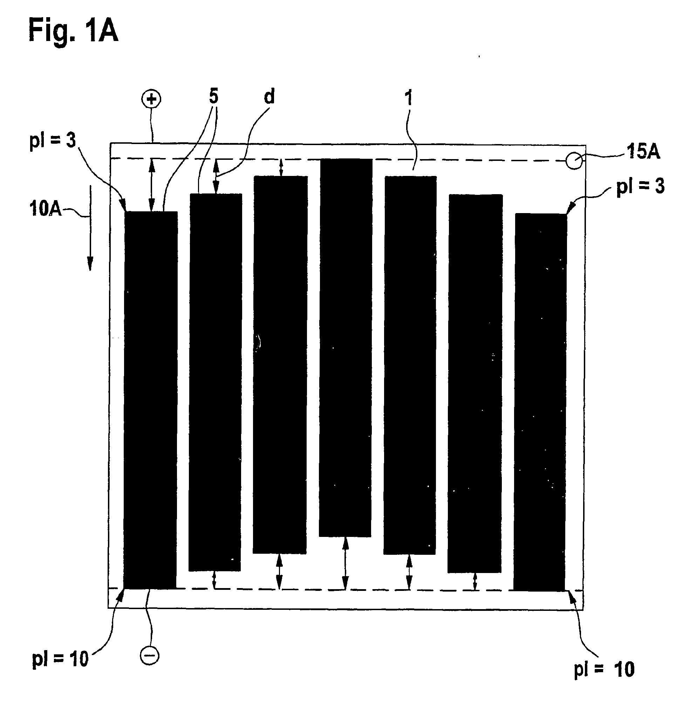

The first and second strip-like separation media may be arranged roughly parallel to each other on their respective carriers. Furthermore it is preferred, that the ends of the first separation media on the first carrier are offset relative to each other and that the first separation media have the same length. This means that the first separation media which are roughly arranged parallel to each other are displaced along their length, as for example shown in the figures 1A and 1B. This positional offset increases the distribution of proteins of different pl ranges on the first separation media perpendicular to the length of the first separation media after the first separation step A). This increased distribution helps to avoid "pl gaps" during the transfer step B).

The apparatus furthermore comprises a positioner for positioning the second carrier and the first carrier relative to each other on top of each other, thereby positioning the first strip-like separation media diagonally to the second strip-like separation media. This enables an easy diagonal transfer of most of the molecules separated in the first step A) to the second separation media in step B).

The positioner can preferably comprise a frame, which keeps the two carriers together and prevents slipping of the carriers during the transfer procedure B).

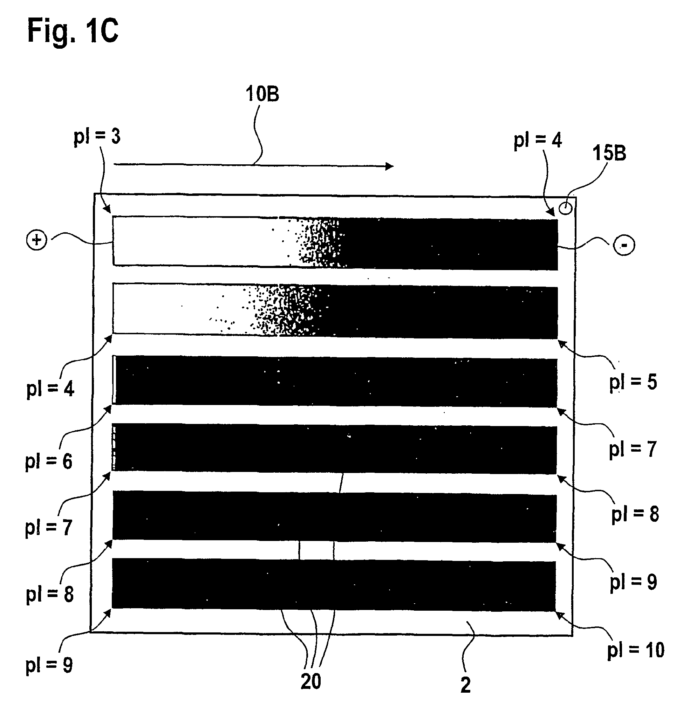

The positioner advantageously comprises a first positioning element on one carrier and a second positioning element mating to the first element on the other carrier, fitting into each other when the first separation media are orientated diagonally relative to the second separation media. The first positioning element and the second positioning element can for example be a protrusion on one carrier and an indentation with a complementary shape to the protrusion on the other carrier, as for example shown in the figures 1B and 1C. These first and second positioning elements ensure, that the first separation media are orientated diagonally or even perpendicular to the second separation media during the transfer step B) (see for example Figure 1 D). These means of positioning provide an easy handling of the apparatus.

In the following, the invention will be explained in more detail by the figures and embodiments. All figures are just simplified schematic representations presented for illustration purposes only.

### BRIEF DESCRIPTION OF THE DRAWINGS

The figures 1A to 1E depict top views of different separation media during various steps of the method of the invention.

### DETAILED DESCRIPTION OF EMBODIMENTS OF THE INVENTION

Figure 1a shows a top view of a first carrier 1 with seven first strip-like separation media 5 formed of gel strips during the step A) of a preferred method of the invention. The gel strips 5 are all positioned parallel to each other, being displaced along their length, thereby creating an offset d. The gel strips 5 all have the same pl range, for example between a pl of 3 and 10. The arrow 10A indicates the direction of the first isoelectric focusing procedure A) when a voltage is applied across the gel strips 5 as indicated with the plus and minus signs. Furthermore, a first positioning element 15A, for example in the form of a protrusion, is present on the first carrier. This element is important for the right orientation of the first and second carrier relative to each other during the transfer step B) (see Figure 1D).

Figure 1B depicts the carrier of Figure 1A after the first wide range separation was carried out in step A). The protein bands 11 are separated along the length of the strips according to their pl ranges. Due to the large pl gradient of the first gel strips 5 a pre-separation with relatively low resolution was performed, so that each protein band 11 still might comprise different proteins with similar isoelectric points. When a cell lysate is applied on the first gel strips 5, one continuous band of proteins distributed over the entire length of the first gel strips might result after the first separation, due to the large amount of different proteins in the cell lysate. In order to simplify the presentation, distinctive consecutive protein bands 11 are shown in Figure 1D for every pl range between 3 and 10 for just one first gel strip 5. This first wide range separation A) might be a pre-selection for a second isoelectric separation step C) or alternatively a pre-selection for further multidimensional liquid chromatography, gel electrophoresis or analysis by a chip array after the extraction step D2).

Figure 1C shows a top view of a second carrier 2 with second gel strips 20 during the second separation step C). The arrow 10B denotes the direction of the second narrow range separation. A second positioning element 15B mating to the first positioning element 15A is present on the second carrier 2. The second positioning element 15B can, for example, be an indentation or even a hole fitting together with the protrusion 15A of the first carrier when the first 5 and second 20 gel strips are orientated perpendicular to each other and are in direct contact. For the second narrow range separation in step C) the second gel strips 20 have different consecutive starting and end points for their pl ranges. Neighboring gel strips 20 have consecutive pl ranges, for example, one gel strip pl range 3 to 4, the next, neighboring gel strip 4 to 5 and so on as indicated in Figure 1C. This special arrangement of second gel strips 20 enables an easy orthogonal transfer of the proteins separated in step A) to the second gel strips.

Figure 1D shows another embodiment of the method of the invention carrying out step B) and step C) in one step. The first carrier 1 with the first gel strips 5 is located on top of the second carrier 2 with the second gel strips 20. A frame 30 keeps the two carriers together and prevents a displacement during the transfer of the molecules in step B). Furthermore the two positioning elements 15A and 15B are fitting together, indicating that the second gel strips are orientated orthogonal to the first gel strips 5, so that every second gel strip 20 is in contact with all the first gel strips 5. In order to simplify the presentation in Figure 1 D; the protein bands 11 present in all first gel strips 5 are just shown for one pl range between 3 and 4.

Due to the positional offset d of the first gel strips 5 to each other, protein bands 11 located on slightly different areas of the first gel strips 5 are transferred to one second gel strip 20, thereby creating a "fuzziness" in the pl ranges in order to avoid "pl gaps" during the transfer step B) due to the distances a between adjacent second gel strips 20. As shown in Figure 1 D protein bands 11 roughly located in the pl range 3 to 4 on the first gel strips 5 are mostly transferred to the second gel strip 20 having a similar pl gradient of 3 to 4. The transfer of the molecules from the first gel strips 5 to the second gel strips 20 and the second separation step C) can be carried out in one step when a voltage, indicated by the plus and minus signs, is applied to the second gel strips 20.

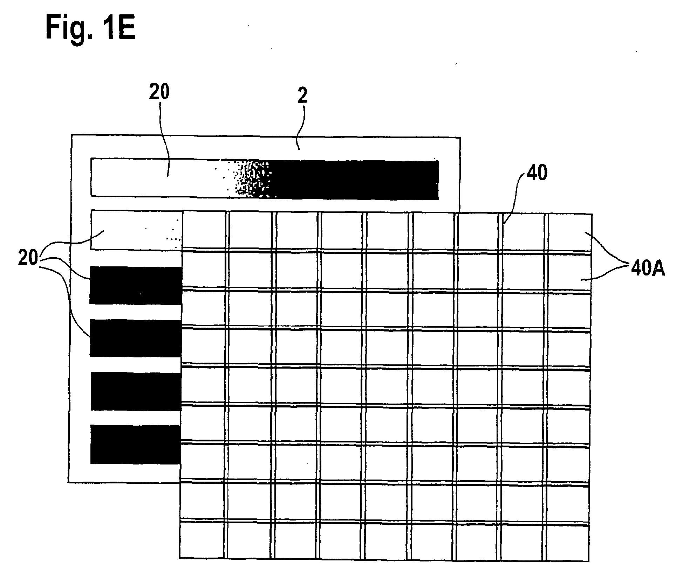

Figure 1E depicts a top view of an arrangement of a second carrier 2 and a grid-like structure 40 during step D2) of an embodiment of the method of the invention. A bottomless microtiter plate 40 with different compartments 40A is shown. This microtiter plate 40 can be arranged over the second carrier 2 and pressed into the second gel strips 20, therefore separating the gel strips into different compartments, containing different proteins with different isoelectric points. Subsequently solvents can be applied to each compartment, extracting the proteins from the gel. The same extraction procedure can also be carried out after step A) using the first separation media (step D1).

## Claims

1. A method for electrophoretic separation of amphoteric molecules (11) according to their isoelectric points, comprising the following steps:
A) carrying out a first separation according to the isoelectric points of the amphoteric molecules (20) in one or more first strip-like separation media (5) located on a first carrier (1), wherein the first separation media (5) have a respective first pl range,
B) transferring the amphoteric molecules (11) separated in step A) to a plurality of second strip-like separation media (20) located on a second carrier (2), wherein the second separation media (20) have a respective second pl range different from the first pl range, the first and second separation media are brought into direct contact, and a voltage is applied to the second separation media in order to transfer the molecules, wherein in step B) the second carrier (2) and the first carrier (1) are positioned relative to each other on top of each other and the first separation media (5) are orientated diagonally or even perpendicular to the second separation media (20),
C) carrying out a second separation of the molecules(11) in the plurality of second separation media (20) according to isoelectric points, and
D2) isolating the molecules (11) from the second strip-like separation media (20).

2. Method according to claim 1, further comprising the following step:
D1) isolating the molecules (11) separated in step A) from the first strip-like separation media (5).

3. Method according to claim 1 or 2, comprising at least one of the features:
- first separation media (5) each having the same pl range are used, and second separation media (20) each having different starting- and endpoints for its pl range are used;
- the first (5) and second separation media (20) are selected in such a way, that the pl range of the first separation media is larger than the pl range of the second separation media;
- in step A) first separation media (5) with a maximum pl range from 1 to 12 are used, and in step C) second separation media (20) with a maximum pl range < 1 are used;
- the first strip-like separation media (5) are arranged roughly parallel to each other on the first carrier (1), and the second strip-like separation media (20) are arranged roughly parallel to each other on the second carrier (2).

4. Method according to claim 1 or any one of the above claims, comprising
- in step B) that every second separation medium (20) is in contact with more than one of the first separation media (5).

5. Method according to claim 1 or any one of the above claims, comprising at least one of the features:
- in step B) molecules (11) of roughly the same isoelectric point range, located on different first strip-like separation media (5) are transferred to a same one of the second strip-like separation media (20) roughly having the same isoelectric point range as the molecules (11) being transferred;
- gel-strips are used as first (5) and second (20) separation media;
- in step B) the first (5) and second (20) separation media are brought into direct contact, and a voltage is applied to the second separation media (20) in order to transfer the molecules (11) according to step B) and carry out the separation according to step C);
- in step D2) a grid-like structure (40) is brought into contact with the second separation media, thereby separating the second separation media into different compartments (40A), and at least one solvent is applied into the different compartments (40A), extracting the molecules (11);
- prior to application of the at east one solvent, the molecules (11) in the second separation media (20) are being fragmented;
- after step D1) or step D2) a gel electrophoresis is carried out further separating the molecules (11) according to their mass.

6. Method according to claim 1 or any one of the above claims,
- wherein after step D1) or after step D2) a one-dimensional or multidimensional liquid chromatography (LC) is conducted for further separation of the molecules (11),
- wherein after the LC the molecules (11) are analyzed by mass spectroscopy (MS).

7. Method according to the previous claim,
- wherein the one-dimensional or multidimensional liquid chromatography comprises at least one of the following separation techniques:
- ion exchange chromatography, reversed phase chromatography, size exclusion chromatography, affinity chromatography.

8. Method according to claims 2 or any one of the above claims, comprising at least one of the features:
- after step D1) or after step D2) the molecules are analyzed by a chip array;
- in step D1) a grid-like structure (40) is brought into contact with the first separation media, thereby separating the first separation media into different compartments (40A), and at least one solvent is applied into the different compartments (40A), extracting the molecules (11).

9. An apparatus for a two step separation of amphoteric molecules (11) according to their isoelectric points comprising:
- a first carrier (1) with one ore more first strip-like separation media (5) having a respective first pl range for a first separation step, and
- a second carrier (2) with a plurality of second strip-like separation media (20) having a respective second pl range different from the first pl range for a second separation step,
- **characterized in that** for transferring the amphoteric molecules (11) separated in the first carrier (1) to the second carrier (2), the first and second separation media are arranged in direct contact, and a voltage is applied to the second separation media in order to transfer the molecules, and **in that**
- the apparatus comprises a positioner (30, 15A, 15B) adapted for positioning the second carrier (2) and the first carrier (1) relative to each other on top of each other, thereby positioning the strip like first separation media (5) diagonally or even perpendicular to the strip like second separation media (20).

10. Apparatus according to claim 9, comprising at least one of the features:
- the first (5) and second (20) separation media comprise gel-strips, wherein the gel-strips preferably comprise immobilized ampholytes;
- the first separation media (5) have the same pl range, and the second separation media (20) have different consecutive starting- and endpoints for their pl ranges;
- the first strip-like separation media (5) are arranged roughly parallel to each other on the first carrier (1), and the second strip-like separation media (20) are arranged roughly parallel to each other on the second carrier (2);
- the first separation media (5) have the same length, and the ends of the first separation media (5) are offset (d) relative to each other.

11. Apparatus according to the previous claim, comprising at least one of the features:
- the positioner comprises a frame (30);
- the positioner comprises a first positioning element (15A) on one carrier and a second positioning element (15B) mating to the first element on the other carrier, fitting into each other when the first separation media (5) are orientated diagonally relative to the second separation media (20).

12. Apparatus according to any one of the above claims 9-11, comprising at least one of the features:
- a grid-like structure (40) with different compartments (40A) for extraction of the molecules (11) from the first (5) or second (20) separation media, wherein the grid-like structure preferably comprises a bottomless frame with separate compartments.

13. Apparatus according to any one of the above claims 9-12, comprising at least one of the features:
- the first and second carrier comprise a flat plate or sheet;
- the first and second carrier comprise bar code identifiers for sample tracking.

14. An apparatus, for separation of amphoteric molecules (11) according to their isoelectric points, adapted for executing the method of any one of the claims 1-8.

## Patentansprüche

1. Ein Verfahren für eine elektrophoretische Trennung von amphoteren Molekülen (11) in Abhängigkeit von ihren isoelektrischen Punkten, welches die folgenden Schritte aufweist:
A) Ausführen einer ersten Trennung in Abhängigkeit von den isoelektrischen Punkten der amphoteren Moleküle (11) in einem oder mehreren streifen-ähnlichen Trennungsmitteln (5), die auf einem ersten Träger (1) lokalisiert sind, wobei die ersten Trennungsmittel (5) einen entsprechenden ersten pl Bereich haben,
B) Transferieren der amphoteren Moleküle (11), die in Schritt A) getrennt werden, zu einer Mehrzahl von zweiten streifen-ähnlichen Trennungsmitteln (20), die auf einem zweiten Träger (2) lokalisiert sind, wobei die zweiten Trennungsmittel (20) einen entsprechenden zweiten pl Bereich verschieden von dem ersten pl Bereich haben, wobei die ersten und zweiten Trennungsmittel in direkten Kontakt gebracht werden und eine Spannung an die zweiten Trennungsmittel angelegt wird, um die Moleküle zu transferieren, wobei in Schritt B) der zweite Träger (2) und der erste Träger (1) relativ zueinander über einander positioniert sind und die ersten Trennungsmittel (5) schräg oder sogar senkrecht zu den zweiten Trennungsmittel (20) orientiert sind,
C) Ausführen einer zweiten Trennung der Moleküle (11) in der Mehrzahl von zweiten Trennungsmitteln (20) in Abhängigkeit von den isoelektrischen Punkten, und
D2) Isolieren der Moleküle (11) aus dem zweiten streifen-ähnlichen Trennungsmitteln (20).

2. Verfahren gemäß Anspruch 1, ferner den folgenden Schritt aufweisend:
D1) Isolieren der Moleküle (11), die in Schritt A) getrennt wurden, aus dem ersten streifen-ähnlichen Trennungsmitteln (5).

3. Verfahren gemäß Anspruch 1 oder 2, welches zumindest eines der Merkmale aufweist:
- erste Trennungsmittel (5), die jeweils den gleichen pl Bereich haben, werden verwendet und zweite Trennungsmittel (20), die jeweils verschiedene Start- und Endpunkte für ihren pl Bereich haben, werden verwendet;
- die ersten (5) und zweiten Trennungsmittel (20) werden derart ausgewählt, dass der pl Bereich der ersten Trennungsmittel größer ist als der pl Bereich der zweiten Trennungsmittel;
- in Schritt A) werden erste Trennungsmittel (5) mit einem maximalen pl Bereich von 1 bis 12 verwendet und in Schritt C) werden zweite Trennungsmittel (20) mit einem maximalen pl Bereich <1 verwendet;
- die ersten streifen-ähnlichen Trennungsmittel (5) sind ungefähr parallel zueinander auf dem ersten Träger (1) angeordnet und die zweiten streifen-ähnlichen Trennungsmittel (20) sind ungefähr parallel zueinander auf dem zweiten Träger (2) angeordnet.

4. Verfahren gemäß Anspruch 1 oder irgend einem der obigen Ansprüche, aufweisend
- in Schritt B), dass jedes zweite Trennungsmittel (20) in Kontakt mit mehr als einem der ersten Trennungsmittel (5) ist.

5. Verfahren gemäß Anspruch 1 oder irgend einem der obigen Ansprüche, welches zumindest eines der Merkmale aufweist:
- in Schritt B) werden Moleküle (11) von ungefähr dem gleichen isoelektrischen Punktbereich, die auf verschiedenen ersten streifen-ähnlichen Trennungsmitteln (5) lokalisiert sind, zu einem gleichen einen der zweiten Trennungsmittel (20) transferiert, welcher ungefähr den gleichen isoelektrischen Punktbereich wie die Moleküle (11) hat, die transferiert worden sind;
- Gel-Streifen werden als erste (5) und zweite (20) Trennungsmittel verwendet;
- in Schritt B) werden die ersten (5) und zweiten (20) Trennungsmittel in direkten Kontakt gebracht und eine Spannung wird an die zweiten Trennungsmittel (20) angelegt, um die Moleküle (11) gemäß Schritt B) zu transferieren und die Trennung gemäß Schritt C) auszuführen;
- in Schritt D2) wird eine gitter-ähnliche Struktur (40) in Kontakt mit den zweiten Trennungsmitteln gebracht, wodurch die zweiten Trennungsmittel in verschiedene Abteile (40A) getrennt werden, und zumindest ein Lösungsmittel in den verschiedenen Abteilen (40A) angewendet wird, welches die Moleküle (11) extrahiert;
- vor der Anwendung des zumindest einen Lösungsmittels werden die Moleküle (11) in den zweiten Trennungsmitteln (20) fragmentiert;
- nach Schritt D1) oder Schritt D2) wird eine Gelelektrophorese ausgeführt, die ferner die Moleküle (11) in Abhängigkeit von ihrer Masse trennt.

6. Verfahren gemäß Anspruch 1 oder irgend einem der obigen Ansprüche,
- wobei nach Schritt D1) oder nach Schritt D2) eine eindimensionale oder mehrdimensionale Flüssigkeitschromatographie (LC) für eine weitere Trennung der Moleküle (11) durchgeführt wird,
- wobei nach der LC die Moleküle (11) mittels Massenspektroskopie (MS) analysiert werden.

7. Verfahren gemäß dem vorherigen Anspruch,
- wobei die eindimensionale oder mehrdimensionale Flüssigkeitschromatographie zumindest eine der folgenden Trennungstechniken aufweist:
- Ionenaustauschchromatographie, umgekehrte Phasenchromatographie, Größenausschlusschromatographie, Affinitätschromatographie.

8. Verfahren gemäß Anspruch 2 oder irgend einem der obigen Ansprüche, welches zumindest eines der Merkmale aufweist:
- nach Schritt D1) oder nach Schritt D2) werden die Moleküle mittels eines Chip-Arrays analysiert;
- in Schritt D1) wird eine gitter-ähnliche Struktur (40) in Kontakt mit den ersten Trennungsmitteln gebracht, wodurch die ersten Trennungsmittel in verschiedene Abteile (40A) getrennt werden, und zumindest ein Lösungsmittel in den verschiedenen Abteilen (40A) angewendet wird, welches die Moleküle (11) extrahiert.

9. Eine Vorrichtung für eine Zwei-Schritt-Trennung von amphoteren Molekülen (11) in Abhängigkeit von ihren isoelektrischen Punkten, aufweisend:
- einen ersten Träger (1) mit einem oder mehreren streifen-ähnlichen Trennungsmitteln (5), die einen entsprechenden ersten pl Bereich für einen ersten Trennungsschritt haben, und
- einen zweiten Träger (2) mit einer Mehrzahl von zweiten streifen-ähnlichen Trennungsmitteln (20), die einen entsprechenden zweiten pl Bereich verschieden von dem ersten pl Bereich für einen zweiten Trennungsschritt haben,
- **dadurch gekennzeichnet, dass** zum Transferieren der amphoteren Moleküle (11), die in dem ersten Träger (1) getrennt worden sind, zu dem zweiten Träger (2), die ersten und zweiten Trennungsmittel in einem direkten Kontakt angeordnet sind, und eine Spannung an die zweiten Trennungsmittel angelegt wird, um die Moleküle zu transferieren, und dass
- die Vorrichtung einen Positionierer (30, 15A, 15B) ausweist, der zum Positionieren des zweiten Trägers (2) und des ersten Trägers (1) relativ zueinander über einander eingerichtet ist, wodurch die streifen-ähnlichen ersten Trennungsmittel (5) schräg oder sogar senkrecht zu den streifen-ähnlichen zweiten Trennungsmitteln (20) positioniert werden.

10. Vorrichtung gemäß Anspruch 9, die zumindest eines der Merkmale aufweist:
- die ersten (5) und zweiten (20) Trennungsmittel weisen Gel-Streifen auf, wobei die Gel-Streifen bevorzugt immobilisierte Ampholyte aufweisen;
- die ersten Trennungsmittel (5) haben den gleichen pl Bereich und die zweiten Trennungsmittel (20) haben verschiedene aufeinanderfolgende Start- und Endpunkte für ihre pl Bereiche;
- die ersten streifen-ähnlichen Trennungsmittel (5) sind ungefähr parallel zueinander auf dem ersten Träger (1) angeordnet und die zweiten streifen-ähnlichen Trennungsmittel (20) sind ungefähr parallel zueinander auf dem zweiten Träger (2) angeordnet;
- die ersten Trennungsmittel (5) haben die gleiche Länge und die Enden der ersten Trennungsmittel (5) sind relativ zueinander versetzt (d).

11. Vorrichtung gemäß dem vorherigen Anspruch, die zumindest eines der Merkmale aufweist:
- der Positionierer weist einen Rahmen (30) auf;
- der Positionierer weist ein erstes Positionierelement (15A) auf einem Träger und ein zweites Positionierelement (15B), welches zu dem ersten Element passt, auf dem anderen Träger auf, die ineinander passen, wenn die ersten Trennungsmittel (5) schräg relativ zu den zweiten Trennungsmitteln (20) orientiert sind.

12. Vorrichtung gemäß irgend einem der obigen Anspruch 9 bis 11, die zumindest eines der Merkmale aufweist:
- eine gitter-ähnliche Struktur (40) mit verschiedenen Abteilen (40A) für eine Extraktion der Moleküle (11) aus den ersten (5) oder zweiten (20) Trennungsmitteln, wobei die gitter-ähnliche Struktur bevorzugt einen bodenlosen Rahmen mit getrennten Abteilen aufweist.

13. Vorrichtung gemäß irgend einem der obigen Anspruch 9 bis 12, die zumindest eines der Merkmale aufweist:
- der erste und zweite Träger weist ein flaches Blech oder Blatt auf;
- der erste und zweite Träger weist Barcodeidentifizier für eine Probenverfolgung auf.

14. Eine Vorrichtung für eine Trennung von amphoteren Molekülen (11) in Abhängigkeit von ihren isoelektrischen Punkten, die eingerichtet ist, das Verfahren gemäß irgendeinem der Ansprüche 1 bis 8 auszuführen.

## Revendications

1. Procédé de séparation électrophorétique de molécules amphotères (11) selon leurs points isoélectriques, comprenant les étapes suivantes consistant à :
A) réaliser une première séparation selon les points isoélectriques des molécules amphotères (20) dans un ou plusieurs premiers supports de séparation de type bandelette (5) situés sur un premier porteur (1), où les premiers supports de séparation (5) ont une première plage pl respective,
B) transférer les molécules amphotères (11) séparées dans l'étape A) vers une pluralité de seconds supports de séparation de type bandelette (20) situés sur un second porteur (2), où les seconds supports de séparation (20) ont une seconde plage pl respective différente de la première plage pl, les premiers et seconds supports de séparation sont amenés en contact direct, et une tension est appliquée aux seconds supports de séparation afin de transférer les molécules, où dans l'étape B), le second porteur (2) et le premier porteur (1) sont positionnés l'un par rapport à l'autre au sommet l'un de l'autre et les premiers supports de séparation (5) sont orientés en diagonale voire perpendiculairement aux seconds supports de séparation (20),
C) réaliser une seconde séparation des molécules (11) dans la pluralité de seconds supports de séparation (20) selon les points isoélectriques, et
D2) isoler les molécules (11) des seconds supports de séparation de type bandelette (20).

2. Procédé selon la revendication 1, comprenant en outre l'étape suivante consistant à :
D1) isoler les molécules (11) séparées dans l'étape A) des premiers supports de séparation de type bandelette (5).

3. Procédé selon la revendication 1 ou 2, comprenant au moins l'une des particularités suivantes :
- des premiers supports de séparation (5) ayant chacun la même plage pl sont utilisés, et des seconds supports de séparation (20) ayant chacun des points de départ et d'arrivée différents pour leur plage pl sont utilisés ;
- les premiers (5) et seconds (20) supports de séparation sont sélectionnés de telle manière que la plage pl des premiers supports de séparation est plus grande que la plage pl des seconds supports de séparation ;
- dans l'étape A), des premiers supports de séparation (5) avec une plage pl maximale de 1 à 12 sont utilisés, et dans l'étape C), des seconds supports de séparation (20) avec une plage pl maximale < 1 sont utilisés ;
- les premiers supports de séparation de type bandelette (5) sont agencés grossièrement parallèlement les uns aux autres sur le premier porteur (1), et les seconds supports de séparation de type bandelette (20) sont agencés grossièrement parallèlement les uns aux autres sur le second porteur (2).

4. Procédé selon la revendication 1 ou l'une quelconque des revendications précédentes, comprenant le fait que
- dans l'étape B), chaque second support de séparation (20) soit en contact avec plus d'un des premiers supports de séparation (5).

5. Procédé selon la revendication 1 ou l'une quelconque des revendications précédentes, comprenant au moins l'une des particularités suivantes :
- dans l'étape B), des molécules (11) grossièrement de la même plage de points isoélectriques, situées sur différents premiers supports de séparation de type bandelette (5) sont transférées vers un même des seconds supports de séparation de type bandelette (20) ayant grossièrement la même plage de points isoélectriques que les molécules (11) transférées ;
- des bandelettes de gel sont utilisées en tant que premiers (5) et seconds (20) supports de séparation ;
- dans l'étape B), les premiers (5) et seconds (20) supports de séparation sont amenés en contact direct, et une tension est appliquée aux seconds supports de séparation (20) afin de transférer les molécules (11) selon l'étape B) et réaliser la séparation selon l'étape C) ;
- dans l'étape D2), une structure de type grille (40) est amenée en contact avec les seconds supports de séparation, séparant ainsi les seconds supports de séparation en différents compartiments (40A), et au moins un solvant est appliqué dans les différents compartiments (40A), extrayant les molécules (11) ;
- avant application du au moins un solvant, les molécules (11) dans les seconds supports de séparation (20) sont fragmentées ;
- après l'étape D1) ou l'étape D2), une électrophorèse sur gel est réalisée séparant davantage les molécules (11) selon leur masse.

6. Procédé selon la revendication 1 ou l'une quelconque des revendications précédentes,
- dans lequel après l'étape D1) ou après l'étape D2), une chromatographie liquide (CL) monodimensionnelle ou multidimensionnelle est conduite pour une séparation supplémentaire des molécules (11),
- dans lequel après la CL, les molécules (11) sont analysées par spectroscopie de masse (SM).

7. Procédé selon la revendication précédente,
- dans lequel la chromatographie liquide monodimensionnelle ou multidimensionnelle comprend au moins l'une des techniques de séparation suivantes :
- chromatographie par échange d'ions, chromatographie en phase inverse, chromatographie d'exclusion-diffusion et chromatographie d'affinité.

8. Procédé selon la revendication 2 ou l'une quelconque des revendications précédentes, comprenant au moins l'une des particularités suivantes :
- après l'étape D1) ou après l'étape D2), les molécules sont analysées par une matrice de puces ;
- dans l'étape D1), une structure de type grille (40) est amenée en contact avec les premiers supports de séparation, séparant de ce fait les premiers supports de séparation en différents compartiments (40A), et au moins un solvant est appliqué dans les différents compartiments (40A), extrayant les molécules (11).

9. Appareil pour une séparation en deux étapes de molécules amphotères (11) selon leurs points isoélectriques comprenant :
- un premier porteur (1) avec un ou plusieurs premiers supports de séparation de type bandelette (5) ayant une première plage pl respective pour une première étape de séparation, et
- un second porteur (2) avec une pluralité de seconds supports de séparation de type bandelette (20) ayant une seconde plage pl respective différente de la première plage pl pour une seconde étape de séparation,
- **caractérisé en ce que** pour le transfert des molécules amphotères (11) séparées dans le premier porteur (1) au second porteur (2), les premiers et seconds supports de séparation sont agencés en contact direct, et une tension est appliquée aux seconds supports de séparation afin de transférer les molécules, et **en ce que**
- l'appareil comprend un positionneur (30, 15A, 15B) adapté pour positionner le second porteur (2) et le premier porteur (1) l'un par rapport à l'autre au sommet l'un de l'autre, positionnant de ce fait les premiers supports de séparation de type bandelette (5) en diagonale voire perpendiculairement aux seconds supports de séparation de type bandelette (20).

10. Appareil selon la revendication 9, comprenant au moins l'une des particularités suivantes :
- les premiers (5) et seconds (20) supports de séparation comprennent des bandelettes de gel, où les bandelettes de gel comprennent de préférence des ampholytes immobilisés ;
- les premiers supports de séparation (5) ont la même plage pl, et les seconds supports de séparation (20) ont des points de départ et d'arrivée consécutifs différents pour leurs plages pl ;
- les premiers supports de séparation de type bandelette (5) sont agencés grossièrement parallèlement les uns aux autres sur le premier porteur (1), et les seconds supports de séparation de type bandelette (20) sont agencés grossièrement parallèlement les uns aux autres sur le second porteur (2) ;
- les premiers supports de séparation (5) ont la même longueur, et les extrémités des premiers supports de séparation (5) sont décalées (d) l'une par rapport à l'autre.

11. Appareil selon la revendication précédente, comprenant au moins l'une des particularités suivantes :
- le positionneur comprend un cadre (30) ;
- le positionneur comprend un premier élément de positionnement (15A) sur un porteur et un second élément de positionnement (15B) s'accouplant au premier élément sur l'autre porteur, s'ajustant l'un dans l'autre lorsque les premiers supports de séparation (5) sont orientés en diagonale par rapport aux seconds supports de séparation (20).

12. Appareil selon l'une quelconque des revendications 9 à 11 précédentes, comprenant au moins l'une des particularités suivantes :
- une structure de type grille (40) avec différents compartiments (40A) pour extraction des molécules (11) depuis les premiers (5) ou seconds (20) supports de séparation, où la structure de type grille comprend de préférence un cadre sans fond avec compartiments séparés.

13. Appareil selon l'une quelconque des revendications 9 à 12 précédentes, comprenant au moins l'une des particularités suivantes :
- le premier et le second porteur comprennent une plaque ou feuille plate ;
- le premier et le second porteur comprennent des identificateurs de code-barres pour un suivi d'échantillon.

14. Appareil de séparation de molécules amphotères (11) selon leurs points isoélectriques, adapté pour exécuter le procédé selon l'une quelconque des revendications 1 à 8.
